# EUROPÄISCHE PATENTSCHRIFT

(11) **EP 3 843 969 B1**
(45) Veröffentlichungstag und Bekanntmachung des Hinweises auf die Patenterteilung: **28.09.2022**
(21) Anmeldenummer: 19762341.6
(22) Anmeldetag: 27.08.2019
(51) Int. Cl.: B29C 45/17, B65B 35/20, B65B 23/22, B29L 31/00

(54) **VERFAHREN UND VORRICHTUNG ZUM VERPACKEN VON SPRITZGUSSTEILEN**
METHOD AND APPARATUS FOR PACKAGING INJECTION MOULDINGS
PROCÉDÉ ET DISPOSITIF POUR L'EMBALLAGE DE PIÈCES MOULÉES PAR INJECTION

(30) Priorität: 28.08.2018 DE 102018120963
(43) Veröffentlichungstag der Anmeldung: 07.07.2021
(73) Patentinhaber: HEKUMA GmbH, Dornierstrasse 14 85399 Hallbergmoos (DE)
(72) Erfinder: KAMMERLOHER, Jakob, 85395 Wolfersdorf (DE)
(74) Vertreter: Rings, Rolf
(86) Internationale Anmeldenummer: PCT/EP2019/072882
(87) Internationale Veröffentlichungsnummer: WO 2020/043738

(56) Entgegenhaltungen:
- EP-A1- 3 424 670
- WO-A1-2011/003507
- WO-A1-2015/049350
- DE-A1-102015 109 734
- DE-A1-102017 118 527
- US-A1- 2014 165 511

## Beschreibung

Die Erfindung betrifft ein Verfahren und eine Vorrichtung zum Verpacken von Spritzgussteilen, insbesondere von medizinischen Reaktionsgefäßen wie Pipettenspitzen, wobei die Spritzgussteile von der Spritzgießmaschine zu Verpackungsbehältern überführt werden.

EP 3 052 388 beschreibt ein derartiges Verfahren, wobei die Spritzgussteile bzw. Pipettenspitzen in Reihenanordnung in einen Werkstückträger überführt werden, nachdem die Spritzgussteile aus einer ringförmigen Anordnung der Kavitäten im Spritzgießwerkzeug entnommen und in eine Reihenanordnung umgesetzt wurden.

Durch die erfindungsgemäße Ausgestaltung soll erreicht werden, dass Verpackungsbehälter mit einer gewünschten Art der Befüllung, insbesondere mit einer kavitätenreinen Befüllung versehen werden können.

Dies wird erfindungsgemäß im Wesentlichen dadurch erreicht, dass beim Überführen der Spritzgussteile vom Werkstückträger auf die Verpackungsbehälter oder auf einen den Verpackungsbehältern vorgeschalteten Pufferspeicher
- vom Werkstückträger entnommene, parallel nebeneinander liegende erste Reihen von Spritzgussteilen quer zu ihrer Längserstreckung (in x-Richtung) expandiert werden, so dass die Reihen einen vorgegebenen, größeren Abstand voneinander haben,
- worauf die Spritzgussteile aus den expandierten ersten Reihen in zweite Reihen überführt werden, die sich quer zu den ersten Reihen erstrecken,
- worauf die zweiten Reihen quer zu ihrer Längserstreckung (in z-Richtung und damit in Längsrichtung der ersten Reihen) über die Verpackungsbehälter oder den Speicher bewegt werden, und
- die Spritzgussteile aus den zweiten Reihen in die Verpackungsbehälter (Racks) oder in den Speicher übertragen werden.

Die ersten Reihen und die quer dazu verlaufenden zweiten Reihen bilden in der Draufsicht im Wesentlichen eine Gitterstruktur, bei der die einzelnen Gitterstäbe (ersten Reihen und zweite Reihen) relativ zueinander verfahrbar bzw. verstellbar sind.

Bei dieser Anordnung ist der Gitterabstand variabel durch Bewegen der ersten Reihen in einer x-Ebene und der zweiten Reihen in einer z-Ebene, worauf die Befüllung eines Speichers oder der Verpackungsbehälter mit Spritzgussteilen aus den zweiten Reihen erfolgt.

Insgesamt wird durch die Gitteranordnung der mit Spritzgussteilen besetzten Reihen und deren wahlweise Verschiebbarkeit relativ zueinander ein frei wählbares Muster für die Befüllung von Verpackungsbehältern oder eines Pufferspeichers erreicht.

Hierbei können die einzelnen ersten und zweiten Reihen durch eine Verstelleinrichtung relativ zueinander verstellt werden. Vorzugsweise werden die einzelnen Reihen von Spritzgussteilen in Ausnehmungen einer Leiste aufgenommen, die mit einem eigenen Antrieb wie z.B. einem Servomotor versehen ist, wobei durch eine elektronische Steuereinrichtung die einzelnen Servomotoren so ansteuerbar sind, dass die damit verbundenen ersten Reihen und/oder zweiten Reihen relativ zueinander verstellt werden.

Eine beispielsweise Ausführungsform der Erfindung wird nachfolgend anhand der Zeichnung näher erläutert. Es zeigen
- Fig. 1: eine schematische Ansicht der Anordnung der Spritzgussteile in Kavitäten eines Werkzeugs einer Spritzgießmaschine, wobei die acht ringförmigen Anordnungen durch ein 64-faches Werkzeug mit Robotgreifarm aus den Kavitäten des Spritzgießwerkzeugs entnommen werden,
- Fig. 2: eine Ansicht der Anordnung in Fig. 1 mit Markierung der für eine Reihenanordnung in einem ersten Schritt übergebenen Spritzgussteile,
- Fig. 3: die aus Fig. 2 entnommenen Spritzgussteile in ihre Anordnung in einer Transferstation,
- Fig. 4: die Ergänzung der in Fig. 2 verbliebenen Spritzgussteile zu einer Reihenanordnung,
- Fig. 5: das Verdichten der in Fig. 4 beabstandeten acht senkrechten Reihen zu acht dicht nebeneinanderliegenden senkrechten Reihen,
- Fig. 6: in einer Draufsicht eine Hälfte eines Werkstückträgers mit acht horizontalen Trägerleisten zur Aufnahme der acht Reihen von Spritzgussteilen aus Fig. 5,
- Fig. 6a: eine Ansicht des gesamten Werkstückträgers, wobei der in Fig. 6 wiedergegebene Teil von Spritzgussteilen 01 bis 64 als Abschnitt 1 wiedergegeben ist,
- Fig. 7: eine Fig. 5 entsprechende Anordnung nach einem zweiten Zyklus der Spritzgussteilentnahme,
- Fig. 8: in einer Ansicht entsprechend Fig. 6 Spritzgussteilen 01 bis 64 des zweiten Entnahmezyklus als Abschnitt 2 in Fig. 8a
- Fig. 9: eine Ansicht entsprechend Fig. 5 und Fig. 7 nach einem dritten Entnahmezyklus,
- Fig. 10: den Werkstückträger nach dem dritten Zyklus der Spritzgussteilentnahme aus dem Spritzgießwerkzeug mit dem in Fig. 10a wiedergegebenen dritten Abschnitt,
- Fig. 11: die zweite Hälfte des Werkstückträgers mit vollständiger Befüllung, wobei Fig. 11a den gesamten Werkstückträger mit den Abschnitten 1 bis 6 wiedergibt,
- Fig. 12: eine schematische Darstellung der Expansion der Trägerleisten des Werkstückträgers in einer x-Richtung am Sektor 1 des Werkstückträgers,
- Fig. 13: eine Fig. 12 entsprechende Ansicht der Expansion der Trägerleisten des Sektors 2 in x-Richtung,
- Fig. 14: eine schematische Draufsicht auf acht in x-Richtung expandierte Trägerleisten mit quer dazu verlaufenden Transferleisten, wobei die Transferleisten anschließend (Fig. 15) horizontal in z-Richtung expandiert werden, nachdem sie Spritzgussteile aus den Trägerleisten entnommen haben,
- Fig. 15: eine Draufsicht auf einen Rackpuffer mit über dem Rackpuffer angeordneten, expandierten Transferleisten, wobei Fig. 15a ein einzelnes Rack des Rackpuffers wiedergibt,
- Fig. 16: eine schematische perspektivische Darstellung der Anordnung in Fig. 14 und 15, wobei die Transferleisten im noch nicht expandierten Zustand über dem dritten Abschnitt der Trägerleisten angeordnet sind,
- Fig. 17: die in Fig. 16 noch nicht expandierte Einheit von Transferleisten bei der Expansion in z-Richtung über dem Rackpuffer,
- Fig. 18: eine Ansicht entsprechend Fig. 14 bei einem weiteren Zyklus, und
- Fig. 19: die Expansion der Transferleisten über dem in x-Richtung verschobenen Rackpuffer.

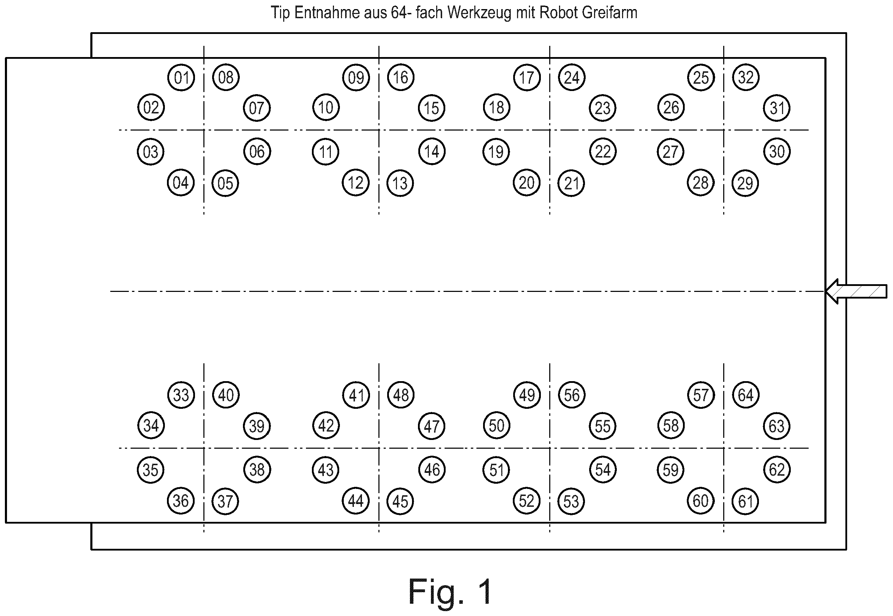

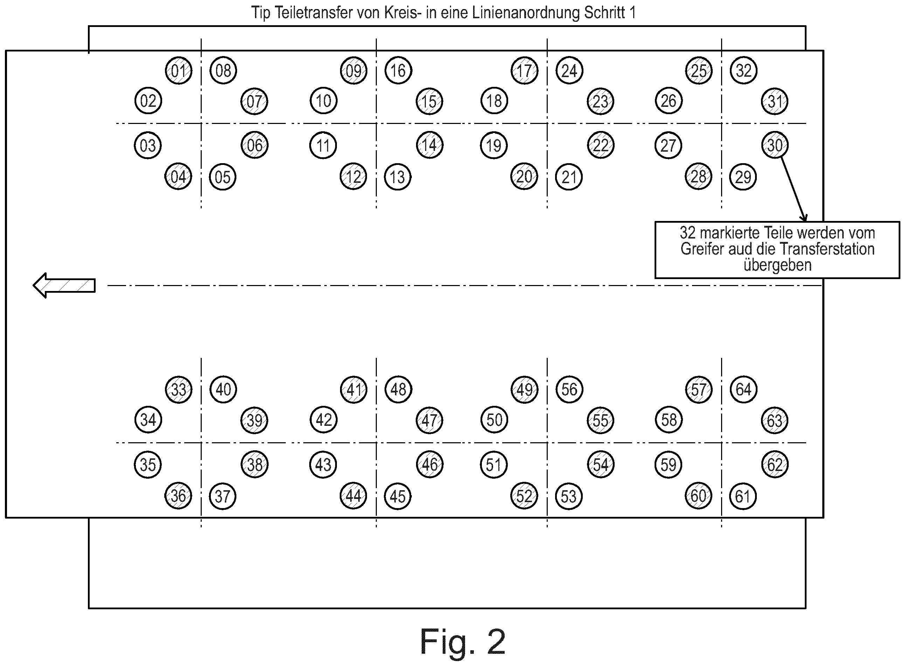

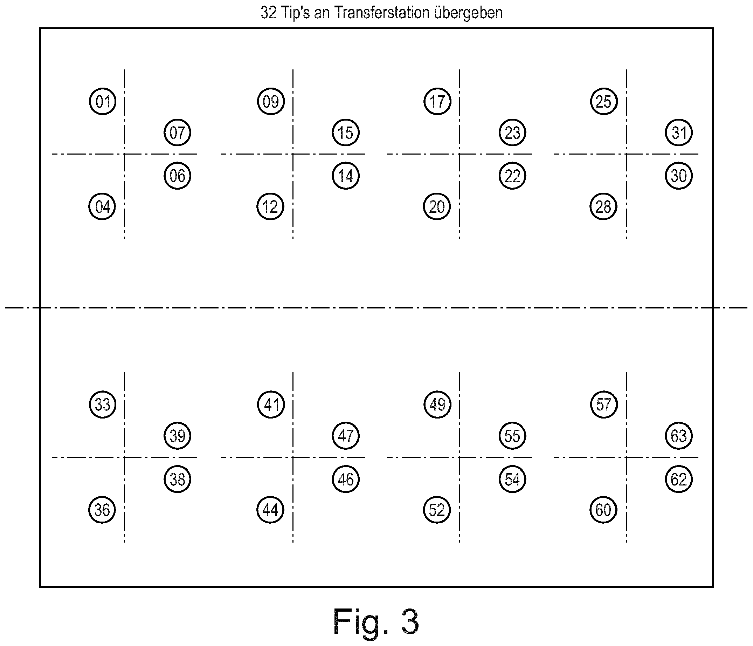

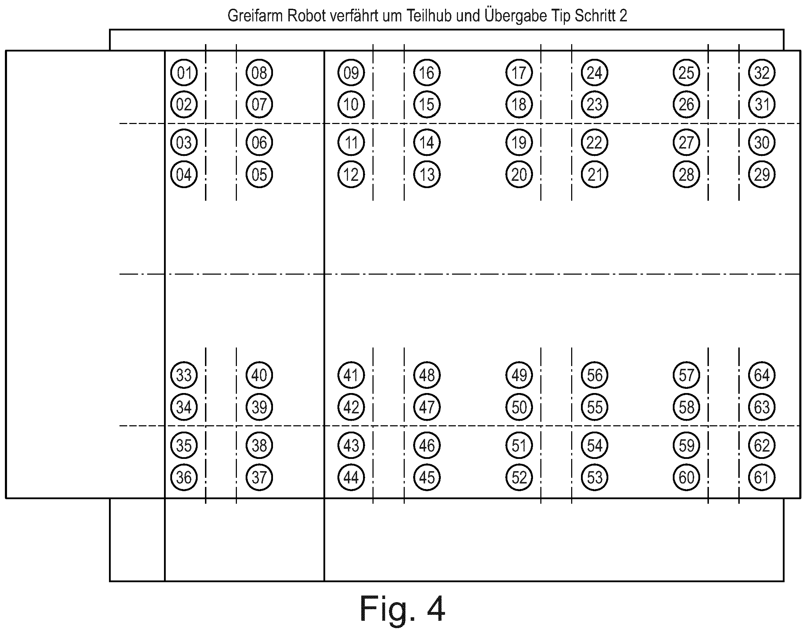

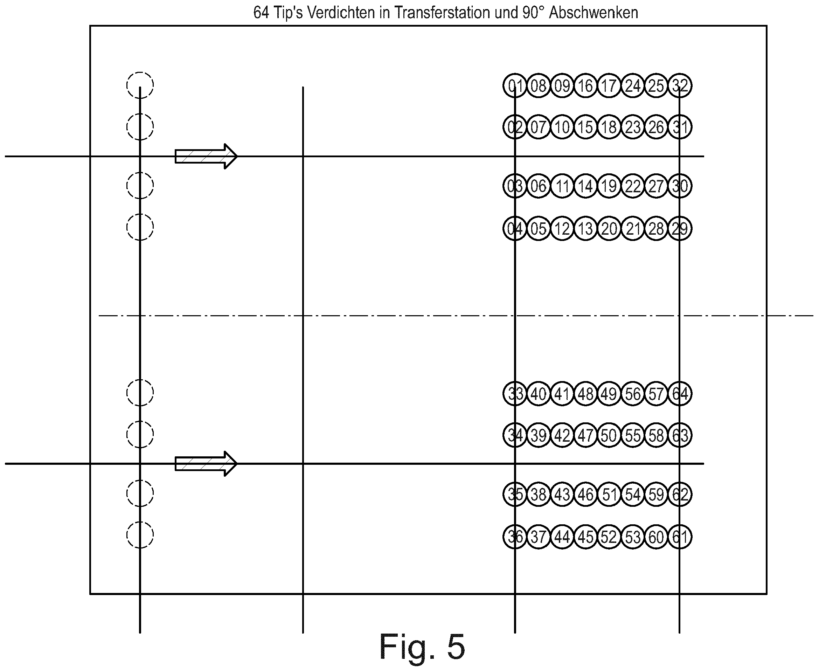

Die in den Fig. 1 bis 5 beschriebene Umsetzung der Spritzgussteile aus der Ring- bzw. Kreisanordnung der Kavitäten im Spritzgießwerkzeug in eine Reihenanordnung im Werkstückträger ist in EP 3 052 388 in Einzelnen beschrieben.

Die einzelnen Spritzgussteile bzw. Pipettenspitzen (Tips) sind in den Fig. 1 bis 11 jeweils mit den Nummern der Kavitäten im Spritzgießwerkzeug entsprechend Fig. 1 versehen.

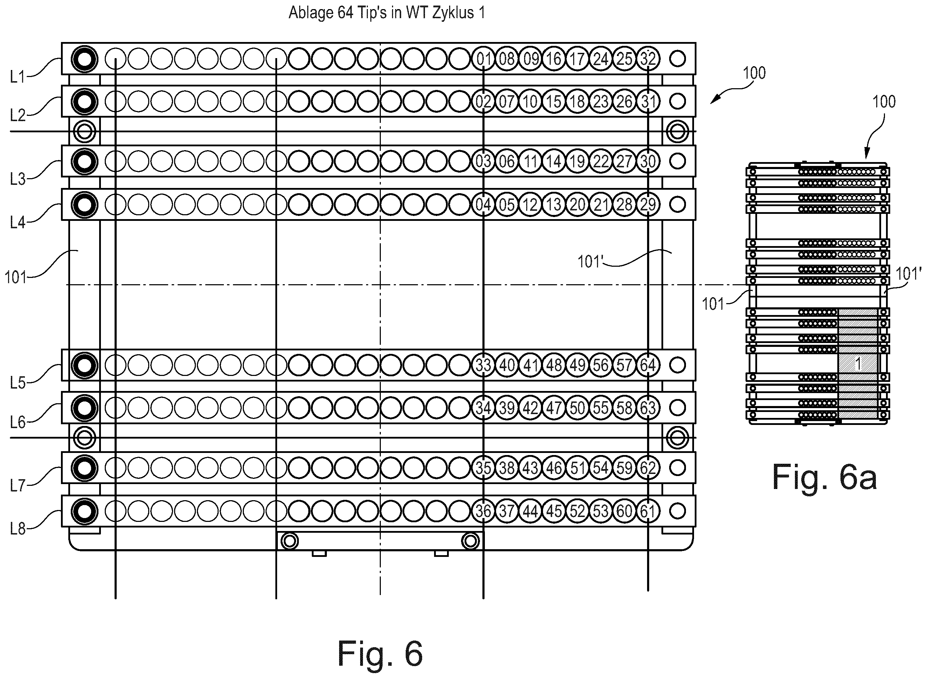

Fig. 6 zeigt eine Draufsicht auf eine Hälfte eines Werkstückträgers 100, die acht Trägerleisten L1 bis L8 aufweist, die an ihren Enden auf zwei Längsträgern 101 und 101' montiert sind. Als Beispiel einer Anordnung zeigt Fig. 6 zwei Gruppen von jeweils vier Leisten in einem Abstand voneinander auf den beiden Längsträgern 101, wobei in jeder Vierergruppe eine Untergruppe von zwei Leisten in einem geringeren Abstand voneinander angeordnet sind. Diese Anordnung der Trägerleisten L im Werkstückträger 100 ist als Beispiel zu sehen, sie kann variieren durch beliebige Abstände der horizontalen Reihen voneinander und der senkrecht dazu verlaufenden Reihen von Spritzgussteilen.

Fig. 6 zeigt die untere Hälfte des in Fig. 6a wiedergegebenen vollständigen Werkstückträgers 100, wobei in dem in Fig. 6a mit 1 bezeichneten Abschnitt die in Fig. 6 im Einzelnen wiedergegebenen Spritzgussteile 01 bis 64 eines ersten Entnahmezyklus eingesetzt sind. Die einzelnen Trägerleisten L1 bis L8 sind von den beiden Längsträgern 101, 101' abnehmbar.

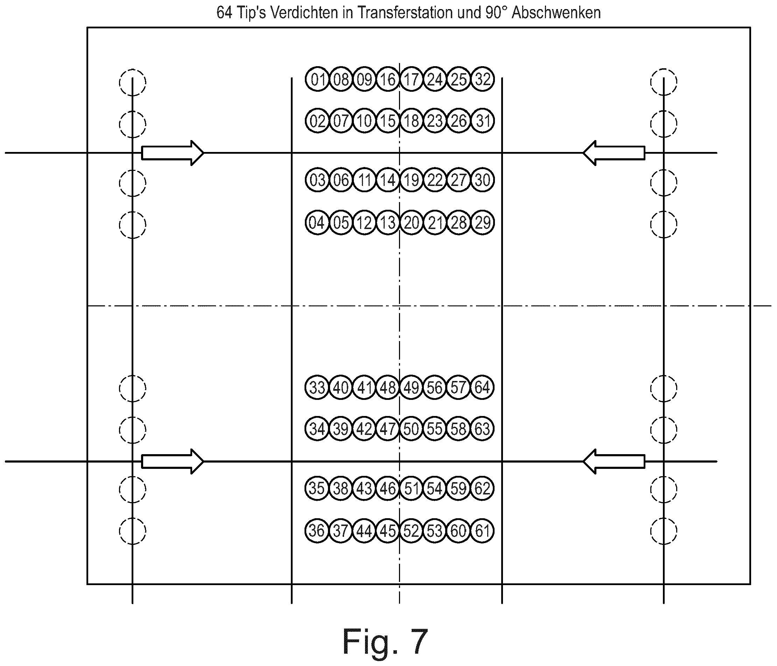

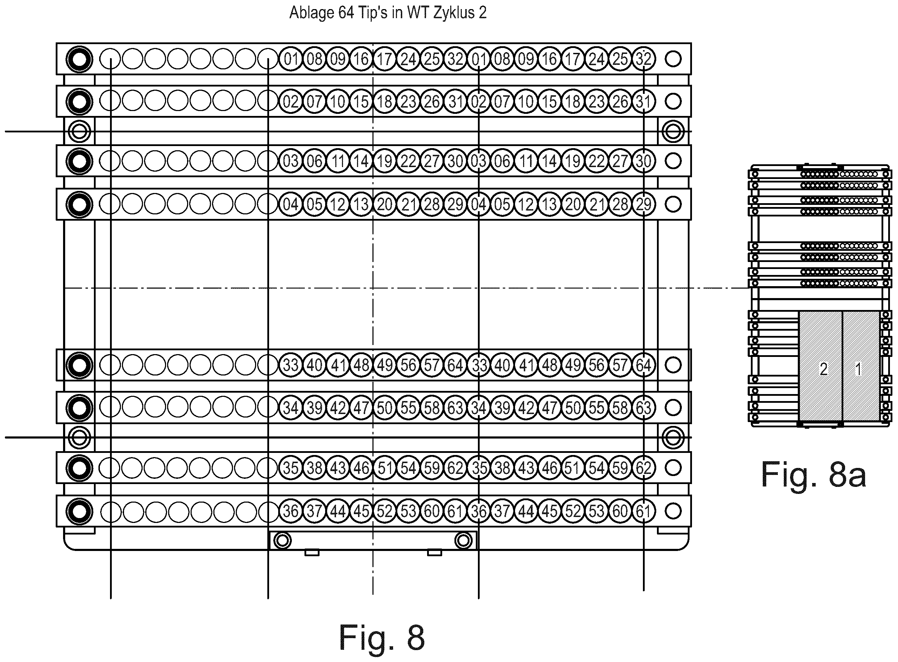

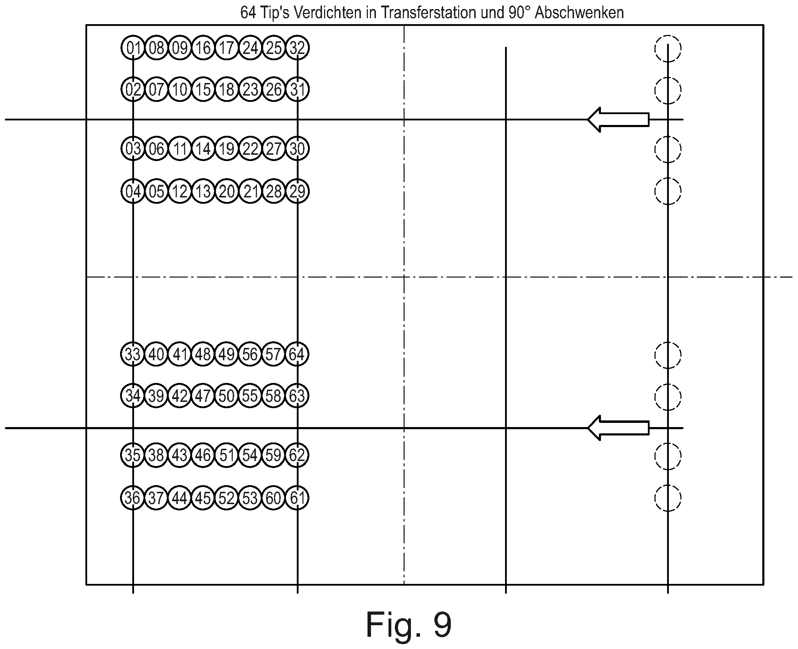

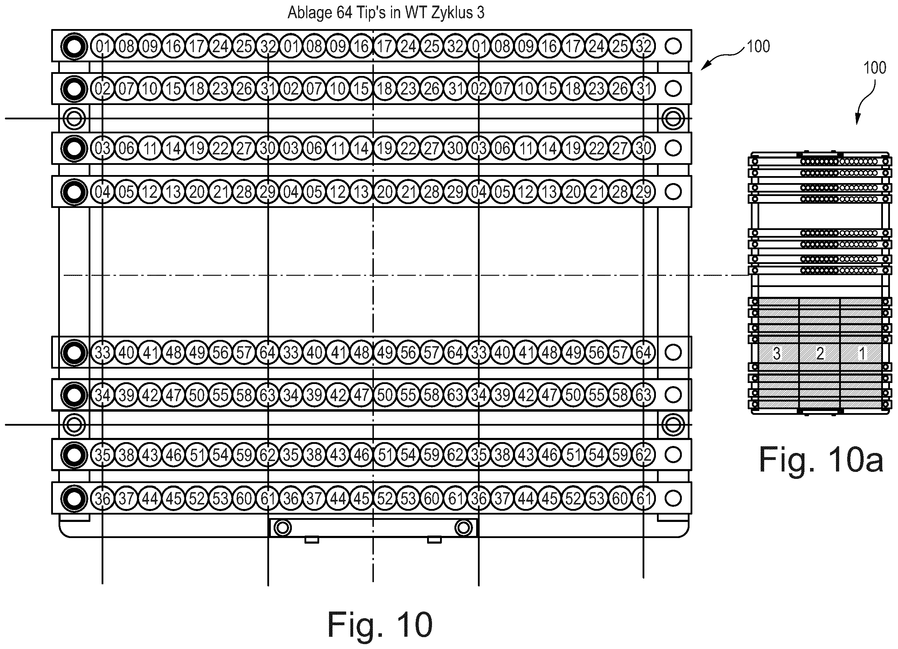

Fig. 7 zeigt die Spritzgussteile 01 bis 64 eines zweiten Entnahmezyklus, die in Fig. 8 im Werkstückträger 100 im mittleren Abschnitt 2 in Fig. 8a eingesetzt sind. In entsprechender Weise zeigt Fig. 9 die Spritzgussteile 01 bis 64 eines dritten Entnahmezyklus und Fig. 10 deren Anordnung im Werkstückträger 100, wobei Fig. 10a diesen Abschnitt als Abschnitt 3 wiedergibt.

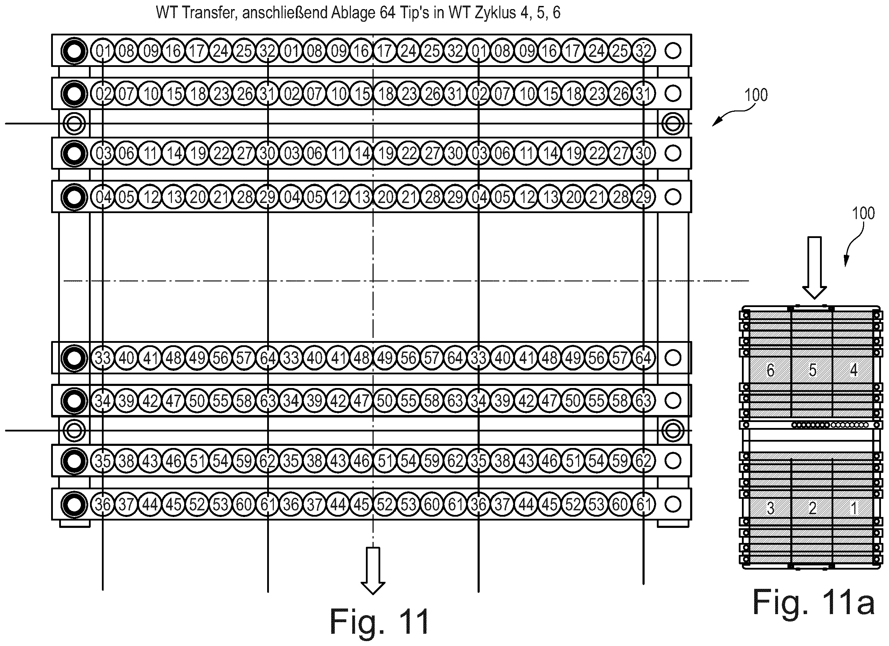

Fig. 11 zeigt entsprechend Fig. 10 die Spritzgussteile von drei weiteren Entnahmezyklen 4, 5 und 6 in der zweiten Hälfte des Werkstückträgers 100 und die entsprechenden Abschnitte 4 bis 6 in Fig. 11a.

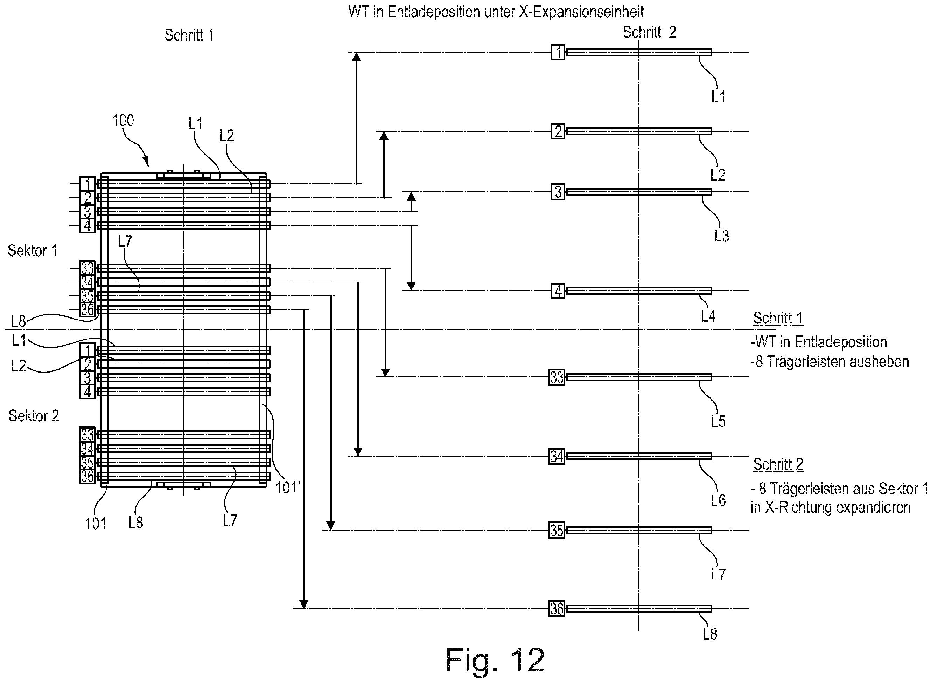

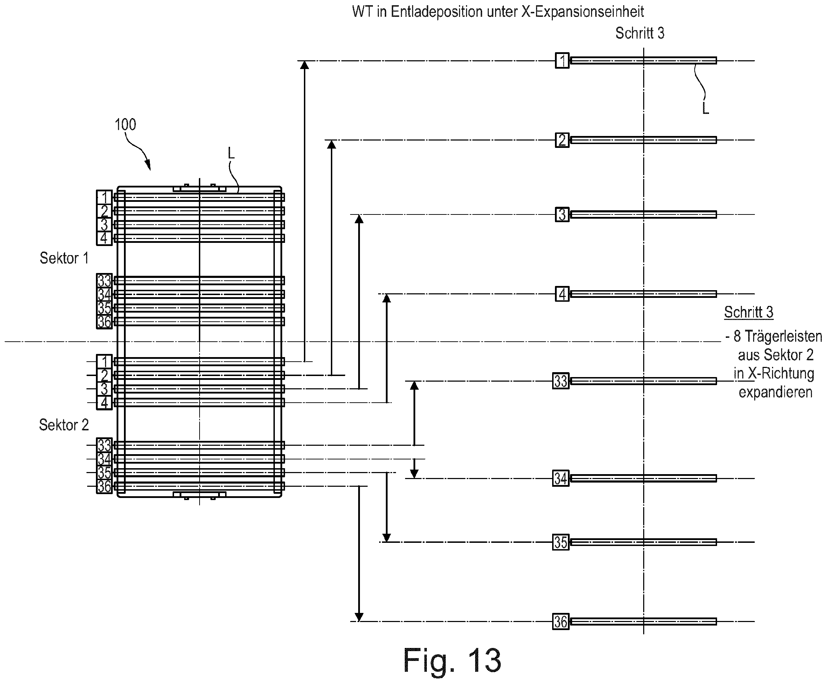

Ausgehend von dem in Fig. 11a wiedergegebenen, mit den Abschnitten 1 bis 6 vollständig aufgefüllten Werkstückträger 100 werden in Fig. 12 und 13 wiedergegebene Expansionsschritte eins bis drei ausgeführt.

Die einzelnen Trägerleisten L werden von den beiden Längsträgern 101, 101' abgenommen und auf einer nicht dargestellten Vorrichtung in die in Fig. 12 und 13 wiedergegebene, in X-Richtung expandierte Stellung überführt, in der die einzelnen Trägerleisten L in einer x-Ebene einen größeren Abstand voneinander haben als am Werkstückträger 100.

Die Anordnungsdichte der Trägerleisten L am Werkstückträger 100 kann auch in anderer Weise als in Fig. 12 und 13 wiedergegeben ausgebildet sein.

Beim Expandieren in X-Richtung quer zur Längserstreckung der Trägerleisten L werden die einzelnen Trägerleisten in gleichen Abständen zueinander positioniert, wobei jede Trägerleiste L über ihre Länge mit Spritzgussteilen aus drei Entnahmezyklen besetzt ist, wie dies Fig. 11 zeigt.

In einem ersten Schritt in Fig. 12 werden die acht Trägerleisten L1 bis L8 des Werkstückträger-Sektors 1 in einer Entladeposition des Werkstückträgers 100 aus diesem ausgehoben und es werden in einem zweiten Schritt die acht Trägerleisten L1 bis L8 dieses Sektors 1 in X-Richtung so auseinander bewegt, dass die acht Trägerleisten L einen vorgegebenen größeren Abstand voneinander haben, wobei der Abstand zwischen den einzelnen Trägerleisten L gleich groß gewählt ist.

Der Abstand im expandierten Zustand kann auch unterschiedlich ausgelegt werden in Abhängigkeit von dem Befüllungsmuster der Verpackungsbehälter.

In einem dritten Schritt in Fig. 13 wird der Sektor 2 des Werkstückträgers in der gleichen Weise expandiert, so dass die acht Trägerleisten L des Sektors 2 in die beabstandete Gruppe von Trägerleisten L in Fig. 13 umgesetzt wird, die bei dem dargestellten Ausführungsbeispiel der Gruppe von expandierten Trägerleisten L in Fig. 12 entspricht.

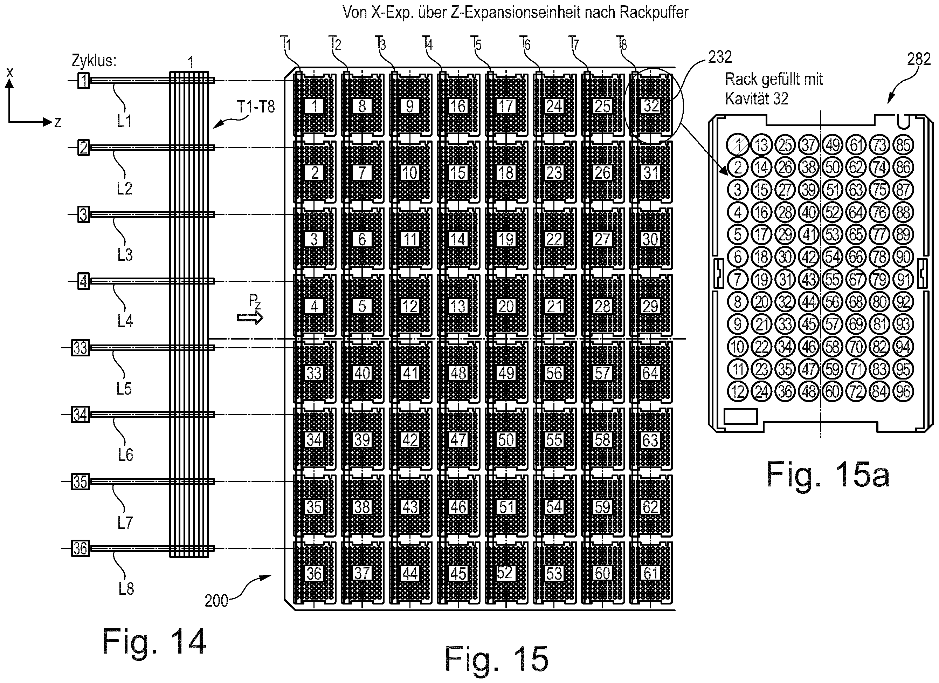

Fig. 14 zeigt die expandierten Trägerleisten L1 bis L8, wobei lediglich die acht Leisten L eines Sektors 1 oder 2 aus Fig. 13 wiedergegeben sind.

Quer zu den in einer x-Ebene liegenden Trägerleisten L sind über diesen in einer z-Ebene relativ dicht nebeneinander liegende Transferleisten T angeordnet, die sich über die Abmessung der expandierten Trägerleisten L erstrecken und derart dicht aneinander liegend angeordnet sind, dass sich jeweils eine Transferleiste T über einer senkrechten Reihe von Spritzgussteilen in Fig. 11 befindet.

In Fig. 11 sind in dem rechten Abschnitt 1 und 4 jeweils acht senkrechte Reihen von Spritzgussteilen vorhanden. Entsprechend sind in Fig. 14 acht Transferleisten T1 bis T8 über diesen acht senkrechten Reihen von Spritzgussteilen in der z-Ebene angeordnet.

In Fig. 14 werden die Spritzgussteile aus den Trägerleisten L entnommen und in entsprechende Ausnehmungen in den Transferleisten T aufgenommen. Die Übernahme kann z.B. durch Ansaugen der Spritzgussteile durch die Transferleisten T erfolgen, wobei die in Fig. 14 wiedergegebenen Transferleisten T jeweils an den Kreuzungsstellen mit den Trägerleisten L ein Spritzgussteil aufnehmen.

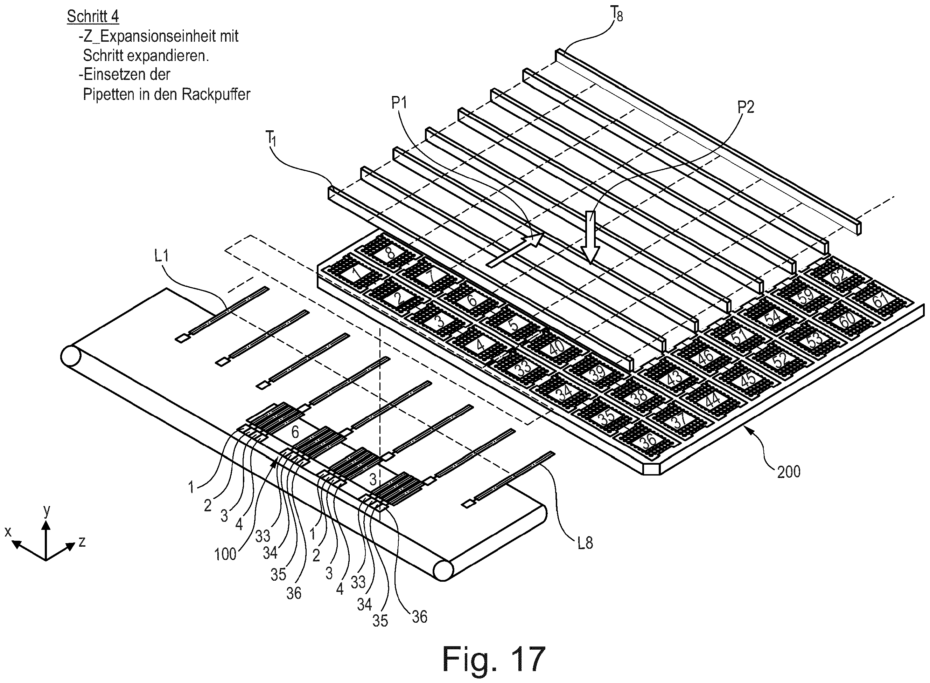

Die in Fig. 14 wiedergegebenen acht Transferleisten T1 bis T8 werden nach der Aufnahme der Spritzgussteile aus den Trägerleisten L in z-Richtung in einer z-Ebene (Fig. 17) quer zur Längserstreckung der Transferleisten T bzw. in Längsrichtung der Trägerleisten L expandiert und über einem in Fig. 15 wiedergegebenen Rackpuffer 200 so positioniert, dass die expandierten Transferleisten T jeweils über der ersten senkrechten Reihe in einem Rack liegen.

Der Rackpuffer 200 in Fig. 15 weist bei dem dargestellten Ausführungsbeispiel entsprechend der Anzahl der 64 Kavitäten im Spritzgießwerkzeug (Fig. 1) 64 Racks 201 bis 264 auf, wobei Fig. 15a ein einzelnes Rack 232 vergrößert wiedergibt.

Die Racks in Fig. 15 sind mit den Nummern 1 bis 64 entsprechend der Nummerierung der Kavitäten im Spritzgießwerkzeug (Fig. 1) nummeriert.

Mit anderen Worten werden bei dem dargestellten Ausführungsbeispiel die Racks 201 bis 264 kavitätenrein befüllt.

Die Nummern der Spritzgussteile im Rack 232 entsprehen nicht mehr den Kavitätennummern, sondern den Nummern der Entnahmezyklen. Das Rack 232 ist nach 96 Spritzgusszyklen mit 96 Spritzgussteilen aus der Kavität 32 befüllt,

Bei diesen Entnahmezyklen wird mehrfach der Werkstückträger (WT) gewechselt, wie in Fig. 15a angegeben.

Die Anordnung der in Fig. 14 in X-Richtung expandiert Trägerleisten L und der in z-Richtung expandierten Transferleisten T in Fig. 15 bildet im Wesentlichen eine Gitterstruktur, in der die einzelnen Leisten Gitterstäbe bilden, deren Abstand voneinander variierbar ist, wobei die Trägerleisten L in der x-Ebene in der Draufsicht versetzt sind zu den expandierten Transferleisten T in der z-Ebene in Fig. 15, die in y-Richtung über der x-Ebene liegt.

Die Reihen von Spritzgussteilen in den Trägerleisten L sind in den Ansprüchen als erste Reihen L bezeichnet und die Reihen von Spritzgussteilen in den Transferleisten T als zweite Reihen T.

Bei dieser Gitteranordnung von ersten Reihen L und zweiten Reihen T können z.B. die zweiten Reihen T in Fig. 14 einen Abstand voneinander haben gegenüber der dichten Anordnung, wodurch die Gitterstruktur verdeutlicht wird.

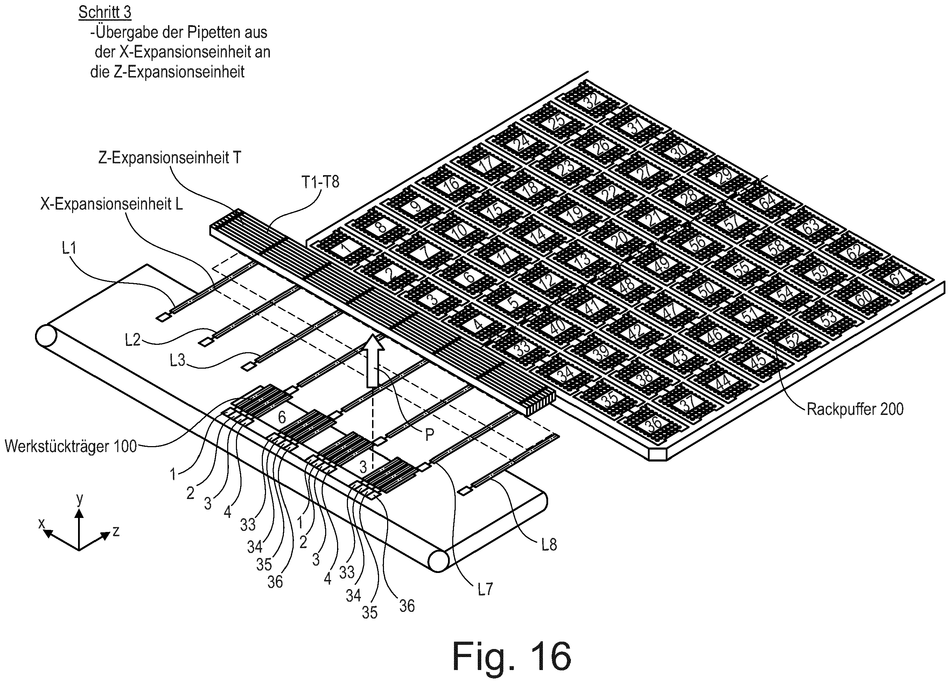

Fig. 16 zeigt zur weiteren Verdeutlichung eine perspektivische Ansicht der Anordnung in Fig. 14 und 15, wobei die aus den acht Transferleisten T1 bis T8 bestehende z-Expansionseinheit über dem rechten Abschnitt 1 bzw. 4 der in Fig. 11 wiedergegebenen Abschnitte 1 bis 6 der Trägerleisten L angeordnet ist.

Mit P ist in Fig. 16 ein Pfeil wiedergegeben, der den Transfer der Spritzgussteile aus den Trägerleisten L in die Transferleisten T in Y-Richtung wiedergibt.

Nach der Übernahme der Spritzgussteile aus den expandierten Trägerleisten L durch die z-Expansionseinheit in Fig. 16 werden die Transferleisten T in z-Richtung in der z-Ebene längs des Pfeiles P1 expandiert und über dem Rackpuffer 200 positioniert, wie dies Fig. 15 zeigt, wobei Fig. 17 dies in perspektivischer Darstellung wiedergibt. Aus der Position in Fig. 15 und Fig. 17 werden die Spritzgussteile entsprechend dem Pfeil P2 in Fig. 17 entgegen der y-Richtung nach unten in die einzelnen Racks überführt.

Bei dem dargestellten Ausführungsbeispiel befinden sich in der ersten senkrechten Reihe der expandierten Trägerleisten L die in Fig. 11 mit 01 bis 04 und 33 bis 36 nummerierten Spritzgussteile.

Entsprechend übernehmen die acht Transferleisten T in Fig. 14 die in Fig. 11 ersten acht senkrechten Reihen von Spritzgussteilen, so dass die oben liegende erste horizontale Reihe mit den Nummern 01 bis 32 der Spritzgussteile durch die Transferleisten T1 bis T8 aufgenommen wird. Der gleiche Übergang der Spritzgussteile erfolgt in den darunter liegenden, expandierten Reihen von Trägerleisten L. auf die Transferleisten T.

In Fig. 14 werden in einem ersten Zyklus die ersten acht senkrechten Reihen von Spritzgussteilen der Trägerleisten L des Sektors 1 durch die Transerleisten T1 bis T8 aufgenommen, in Richtung des Pfeils Pz expandiert und auf die Racks 201 bis 264 des Rackpuffers 200 verteilt, wie Fig. 15 zeigt, wobei die Transferleisten T nach Expansion ein Spritzgussteil in der ersten senkrechten Reihe eines Racks einsetzen.

Fig. 15a zeigt, dass bei diesem Zyklus 1 das mit 1 nummerirte Spritzgussteil im Rack 232 eingesetzt wird.

Die Transferleisten T werden nach Überführung der Spritzgussteile in die Racks wieder zusammengezogen und über den mittleren acht senkrechten Reihen der Trägerleisten L positioniert, worauf in einem zweiten Zyklus die Verteilung der Spritzgussteile von den Trägerleisten L auf die Racks 201 bis 264 nach erneuter Expansion der Transferleisten T erfolgt, wobe der Rackpuffer um einen Schritt nach oben in x-Richtung versetzt ist, so dass ein Spritzgussteil der Kavität 32 an der mit 2 in Fig. 15a nummerierten Stelle im Rack 232 eingesetzt wird.

In einem dritten Zyklus wiederholt sich der Vorgang über dem dritten Abschnitt der Trägerleisten L in Fig. 14.

Nach dem dritten Zyklus sind die Trägerleisten L in Fig. 14 und 16 entleert, worauf sie zusammengezogen und in einen Werkstückträger 100 bzw. auf dessen Längsträgern 101, 101' zum erneuten Befüllen eingesetzt werden.

Zugleich werden die noch vollen Trägerleisten L des zweiten Sektors 2 des Werkstückträgers 100 in die Position in Fig. 14 gebracht, so dass die oben beschriebenen Zyklen 4 bis 6 einsetzen können.

Die Transferleisten T können zum Expandieren in z-Richtung und zum Zusammenziehen für eine erneute Aufnahme von Spritzgussteilen von den Trägerleisten L in einer stationären Einrichtung montiert sein, während die Trägerleisten L für das Abheben vom Werkstückträger 100, die Expansion in x-Richtung und die Rückführung in einen anderen Werkstückträger 100 nach dem Entleeren frei beweglich sind.

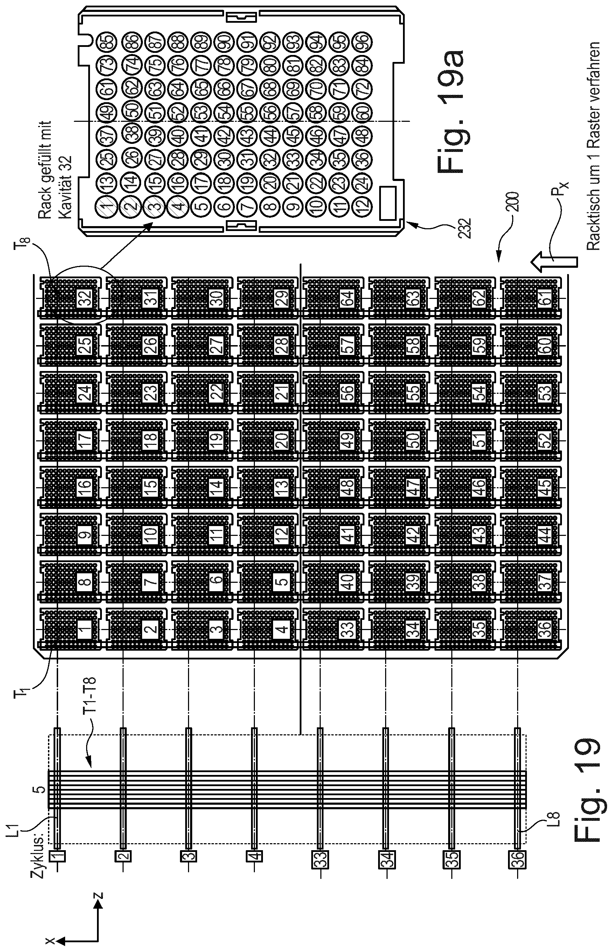

In Fig. 15 sind acht horizontale Reihen von Racks im Rackpuffer 200 wiedergegeben, während die Transferleisten T sich nur knapp über sieben Reihen von Racks erstrecken. Um die Racks auch in der unteren Reihe vollständig aus den Transferleisten T auffüllen zu können, wird vorzugsweise der Rackpuffer 200 in Fig. 15 nach oben relativ zu der z-Expansionseinheit der Transferleisten T verschoben, wie Fig. 19 durch den Pfeil Px zeigt. Es ist auch möglich, die Transferleisten T relativ zum Rackpuffer 200 in x-Richtung zum Befüllen der Racks zu bewegen.

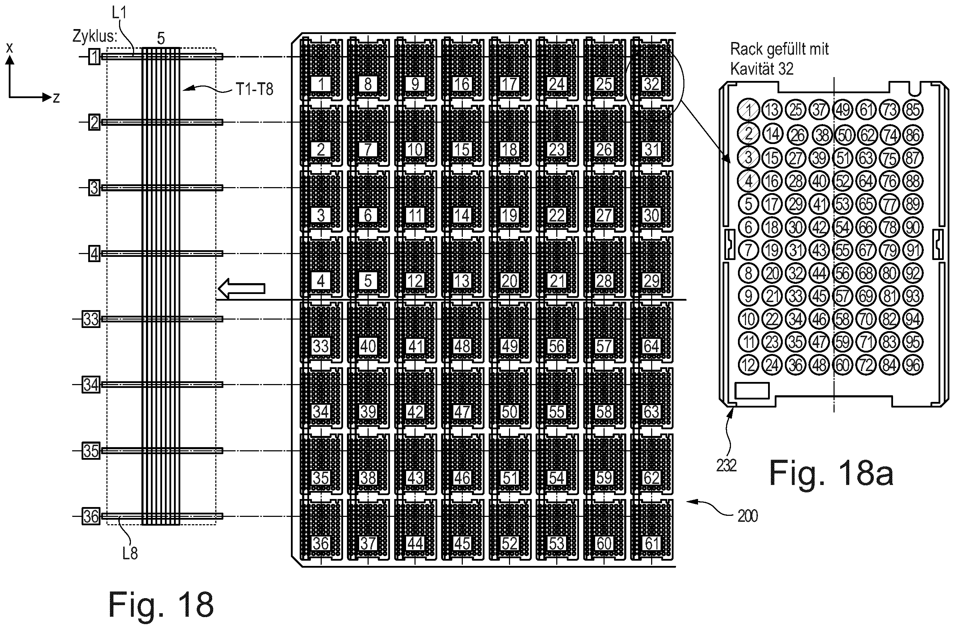

Fig. 18 und 19 zeigen die Verschiebung des Rackpuffers 200 in X-Richtung nach oben gegenüber der Position in Fig. 15.

Fig. 14 zeigt die Transferleisten T über dem rechten der drei Abschnitte der Trägerleisten L entsprechend den Zyklen 1, 2 und 3, während Fig. 18 die Transferleisten T in einem Zyklus 5 über dem mittleren Abschnitt der Trägerleisten L wiedergibt.

In einem vorausgegangenen Zyklus 4 wurden die Transferleisten T jeweils über einer ersten Reihe in den Racks positioniert entsprechend Fig. 15, worauf nach dem Entleeren der Transferleisten T diese in Pfeilrichtung in Fig. 18 wieder zusammengezogen und über den mittleren Abschnitt der Trägerleisten L positioniert wurden.

In Fig. 18 übernehmen die Transferleisten T im Zyklus 5 Spritzgussteile 01 bis 04 und 33 bis 36 von den Trägerleisten L, worauf die Transferleisten T über den einzelnen Racks nach Expansion in z-Richtung positioniert werden, wie dies Fig. 19 zeigt.

In Fig. 14 wurde im ersten Zyklus jeweils die Position 1 im Rack 232 mit einem Spritzgussteil besetzt., wie fig. 15a zeigt.

In dem zuvor geschilderten Zyklus 4 wurde in den nach oben verschobenen Rackpuffer 200 ein Spritzgussteil aus der Kavität 32 in der Position 4 in Fig. 18a eingesetzt, worauf die entleerten Transferleisten T in die Position in Fig. 18 über den Trägerleisten L bewegt wurden.

Nach Entnahme der Spritzgussteile in Fig. 18 durch die Transferleisten T werden diese in Z-Richtung über den Rackpuffer 200 expandiert, wobei der Rackpuffer um einen weiteren Schritt nach oben in X-Richtung versetzt ist, wie Fig. 19 durch den Pfeil Px zeigt, so dass beim Entleeren der Transferleisten T ein Spritzgussteil mit der Nummerierung 5 entsprechend dem Zyklus 5 im Rack 232 eingesetzt wird, wie Fig. 19a zeigt.

Entsprechend wird der Rackpuffer 200 bei den weiteren Zyklen jeweils um einen Schritt entsprechend einer horizontalen Reihe in einem Rackpuffer in X-Richtung nach oben versetzt, bis die Spritzgussteile aus der untersten Trägerleiste L8 in die unterste horizontale Reihe der Racks 236 bis 261 eingesetzt werden kann, die in Fig. 18a und 19a mit den Nummern 12, 24, 36 ... versehen ist.

In Fig. 15a, 18a und 19a ist die Befüllung des Racks 232 mit Spritzgussteilen aus der Kavität 32 des Spritzgießwerkzeugs mit Nummern 1 bis 96 versehen, die nicht mehr der Kavitätennummer entsprechen, sondern dem Wechsel des Werkstückträgers nach verschiedenen Zyklen der Entnahme von Spritzgussteilen aus der Spritzgießmaschine.

Die Leisten L und T bilden Halteeinrichtungen für die Spritzgussteile, so dass beim Transfer mittels der Leisten L und T die Spritzgussteile selbst nicht bewegt werden müssen. Auf diese Weise besteht keine Beschädigungsgefahr für die Spritzgussteile. während der Bewegung der Leisten L und T.

Vorzugsweise ist jede der Transferleisten T und/oder der Trägerleisten L mit einem eigenen Antrieb, wie z.B. einem Servomotor, Schrittmotor oder einem Linearmotor versehen, der durch eine elektronische Steuereinheit angesteuert werden kann, zum individuellen Verstellung der einzelnen Leisten.

Hierdurch ergibt sich eine große Vielfalt an einstellbaren Gitterstrukturen, wobei die einzelnen Gitterstäbe durch die Leisten L und T gebildet werden. Die Gitterstrukturen können somit an kleinere oder größere Verpackungsbehälter angepasst werden.

Es ist aber auch möglich, durch eine nicht dargestellte externe Einrichtung die einzelnen Leisten in eine entsprechende Position zu bringen, ohne dass jede einzelne Leiste einen eigenen Antrieb aufweist.

Durch die Bewegung der in Leisten L und T eingesetzten Spritzgussteile werden diese bei der Verteilung in einem Speicher oder in Verpackungsbehältern nur beim Transfer von den Trägerleisten L in die Transferleisten T und von diesen in die Verpackungsbehälter einzeln bewegt.

Der in Fig. 15 wiedergegebene Rackpuffer 200 kann bei einer praktischen Ausführungsform einer Verpackungsvorrichtung in doppelter Anordnung vorgesehen werden, wobei nach Auffüllen des Rackpuffers in Fig. 15 dieser nach rechts verschoben und für einen weiteren Zyklus ein leere Rackpuffer angrenzend an die z-Expansionseinheit mit den Transferleisten T angeordnet wird, so dass dieser zweite Rackpuffer schrittweise befüllt werden kann, während die Racks aus dem ersten vollständig gefüllten Rackpuffer entnommen und zum Beispiel in einer Verpackungsmaschine in Folie verpackt werden können.

Es sind verschiedene Abwandlungen der beschriebenen Bauformen möglich. So können zum Beispiel die ersten und/oder die zweiten Reihen von Spritzgussteilen auch in der jeweiligen Längsrichtung der Reihen expandiert werden und nicht nur quer zur Längserstreckung. Hierdurch können unterschiedliche Muster der Bereitstellung der Spritzgussteile für die Befüllung eines Speichers oder von Verpackungsbehältern vorgesehen werden.

Auch ist es möglich, die aus der Spritzgießmaschine entnommenen Spritzgussteile in einem Werkstückträger anzuordnen, in dem senkrechte und horizontale Reihen in kompakter Anordnung angeordnet werden, worauf eine frei wählbare Anordnung von Spritzgussteilen aus dem Werkstückträger entnommen und auf ein vorgegebenes Maß expandiert werden kann, worauf Spritzgussteile einer ausgewählten Anordnung in zweite Reihen überführt werden, von denen aus ein Speicher oder Verpackungsbehälter befüllt wird bzw. werden.

Diese vielfältigen Möglichkeiten ergeben sich durch die Bildung von ersten Reihen oder ersten Gruppen in einer x-Ebene nach Entnahme aus dem Werkstückträger und die Überführung von Reihen oder Gruppen in eine z-Ebene, wobei in der x-Ebene und/oder in der z-Ebene eine Expansion auch in senkrecht zueinander liegende Richtungen möglich ist.

Die Abholkonfiguration (Abstand) der expandierten Trägerleisten L und die Abgabekonfiguration (Abstand) der Transferleisten T beim Einsetzen in die Verpackungsbehälter bzw. in den Speicher ist variabel und frei wählbar. Hierdurch ergibt sich eine hohe Variationsmöglichkeit bei der Auslegung der Größe der Verpackungsbehälter und der Anzahl von Spritzgussteilen pro Schuss der Spritzgießmaschine für die Verteilung und Befüllung der Verpackungsbehälter. So kann anstelle der beschriebenen Kavitätenzahl von 64 eine Kavitätenzahl von 128 vorgesehen werden mit einer entsprechenden Vergrößerung des Werkstückträgers bzw. dessen Aufteilung in mehrere Abschnitte anstelle der dargestellten Abschnitte 1 bis 6 (Fig. 11a). In gleicher Weise kann eine Verringerung der Kavitätenzahl auf beispielsweise 32 pro Schuss vorgesehen werden.

In entsprechender Weise können die einzelnen Racks größer oder kleiner ausgelegt werden je nach Kavitätenzahl, insbesondere wenn die Racks kavitätenrein befüllt werden sollen.

## Patentansprüche

1. Verfahren zum Verpacken von Spritzgussteilen, insbesondere von in der Medizin verwendeten Teilen wie Pipettenspitzen, die aus Kavitäten einer Spritzgießmaschine entnommen und in einen Speicher oder in Verpackungsbehälter eingesetzt werden,
- wobei die Spritzgussteile in einem Werkstückträger (100) angeordnet werden, **dadurch gekennzeichnet, dass**
- die Spritzgussteile aus dem Werkstückträger (100) in Form von ersten Reihen (L) entnommen und diese ersten Reihen (L) expandiert werden,
- worauf die Spritzgussteile aus den expandierten ersten Reihen (L) in Form von zweiten Reihen (T) entnommen werden, die senkrecht zu den ersten Reihen (L) verlaufen, und
- die zweiten Reihen (T) expandiert werden,
- worauf die Spritzgussteile aus den zweiten Reihen (T) in Verpackungsbehälter (201 264) oder in einen Speicher eingesetzt werden.

2. Verfahren nach Anspruch 1, wobei Verpackungsbehälter (201 - 264) in nebeneinander liegenden und parallel zu den zweiten Reihen (T) verlaufenden Reihen zum Befüllen aus den zweiten Reihen (T) angeordnet werden.

3. Verfahren nach Anspruch 2, wobei jeweils an einer Kreuzungsstelle zwischen expandierten ersten Reihen (L) und nicht expandierten zweiten Reihen (T) ein Spritzgussteil auf die zweiten Reihen (T) übertragen wird und die Spritzgussteile aus den zweiten Reihen (T) nach deren Expansion in die Verpackungsbehälter (201 - 264) eingesetzt werden.

4. Verfahren nach einem der Anspräche 1 bis 3, wobei die Spritzgussteile aus dem nach mehreren Entnahmezyklen aufgefüllten Werkstückträger (100) so auf die ersten Reihen (L) verteilt werden, dass Spritzgussteile, die aus der gleichen Kavität des Spritzgießwerkzeugs entnommen sind, untereinander liegend in den ersten Reihen (L) positioniert sind, so dass die zweiten Reihen (T) jeweils Spritzgussteile der gleichen Kavität aus den ersten Reihen (L)aufnehmen.

5. Verfahren nach einem der Ansprüche 1 bis 4, wobei zum Befüllen der Verpackungsbehälter oder des Speichers aus den zweiten Reihen (T) eine Relativverschiebung zwischen zweiten Reihen und Verpackungsbehältern bzw. Speicher in Längsrichtung der zweiten Reihen (T) vorgenommen wird.

6. Vorrichtung zum Verpacken von Spritzgussteilen, insbesondere von in der Medizin verwendeten Teilen wie Pipettenspitzen, die aus Kavitäten einer Spritzgießmaschine entnommen und in einen Speicher oder in Verpackungsbehälter eingesetzt werden,
- umfassend
- einen Werkstückträger (100), der abnehmbare Trägerleisten (L) zur Aufnahme von Spritzgussteilen aufweist,
- **gekennzeichnet durch**
- eine Einrichtung zum Expandieren der vom Werkstückträger (100) abgenommenen Trägerleisten (L) quer zu deren Längserstreckung,
- Transferleisten (T), die senkrecht zu den Trägerleisten (L) angeordnet sind, und
- eine Einrichtung zum Expandieren der Transferleisten (T) quer zu deren Längserstreckung.

7. Vorrichtung nach Anspruch 6, wobei
Verpackungsbehälter (201 bis 264) in nebeneinander liegenden Reihen angeordnet sind, die sich parallel zu den Transferleisten (T) erstrecken, und die Transferleisten (T) so expandierbar sind, dass jeweils eine Transferleiste (T) über einer Reihe von Verpackungsbehältern (201 - 264) positionierbar ist.

8. Vorrichtung nach Anspruch 7, wobei
die Verpackungsbehälter (201 bis 264) in Längsrichtung der Transferleisten (T) relativ zu diesen verstellbar sind bzw. die Transferleisten (T) in Richtung ihrer Längserstreckung relativ zu den Verpackungsbehältern verstellbar sind.

9. Vorrichtung nach Anspruch 6, wobei die Transferleisten (T) jeweils mit einem Servomotor zum Verstellen relativ voneinander versehen sind, der durch eine elektronische Steuereinrichtung ansteuerbar ist.

10. Vorrichtung nach einem der Ansprüche 6 bis 9, wobei jede Transferleiste (T) mit einer Einrichtung zur Aufnahme der Spritzgussteile aus den Trägerleisten (L) und zur Abgabe der Spritzgussteile in die Verpackungsbehälter (201 - 264) versehen ist.

## Claims

1. Method of packaging injection-moulded parts, in particular parts used in medicine, such as pipette tips removed from cavities of an injection moulding machine and inserted into a store or into packaging containers,
- wherein the injection-moulded parts are arranged in a workpiece carrier (100), **characterized in that**
- the injection-moulded parts are removed from the workpiece carrier (100) in the form of first rows (L) and these first rows (L) are expanded,
- whereupon the injection-moulded parts are removed from the expanded first rows (L) in the form of second rows (T) running perpendicular to the first rows (L), and
- the second rows (T) are expanded,
- whereupon the injection-moulded parts from the second rows (T) are inserted into packaging containers (201 - 264) or into a store.

2. Method according to Claim 1, wherein packaging containers (201 - 264) are arranged in juxtaposed rows running parallel to the second rows (T), for filling from the second rows (T).

3. Method according to Claim 2, wherein, at each intersection between expanded first rows (L) and non-expanded second rows (T), one injection-moulded part is transferred to the second rows (T), and the injection-moulded parts from the second rows (T) are inserted into the packaging containers (201 - 264) after their expansion.

4. Method according to one of Claims 1 to 3, wherein the injection-moulded parts from the workpiece carrier (100) topped up after multiple removal cycles are distributed across the first rows (L) such that injection-moulded parts removed from the same cavity of the injection moulding tool are positioned one below the other in the first rows (L), so that the second rows (T) each receive injection-moulded parts from the same cavity from the first rows (L).

5. Method according to one of Claims 1 to 4, wherein, for filling the packaging containers or the store from the second rows (T), a relative displacement between second rows and packaging containers or stores, respectively is performed in the longitudinal direction of the second rows (T).

6. Apparatus for packaging injection-moulded parts, in particular parts used in medicine, such as pipette tips removed from cavities of an injection moulding machine and inserted into a store or into packaging containers,
- comprising
- a workpiece carrier (100) having detachable carrier rails (L) for receiving injection-moulded parts,
- **characterised by**
- a device for expanding the carrier rails (L) removed from the workpiece carrier (100) transversely to their longitudinal extent,
- transfer rails (T) arranged perpendicularly to the carrier rails (L), and
- a device for expanding the transfer rails (T) transversely to their longitudinal extent.

7. Apparatus according to Claim 6, wherein
packaging containers (201 - 264) are arranged in juxtaposed rows extending in parallel to the transfer rails (T), and the transfer rails (T) are expandable such that one transfer rail (T) can be positioned above a respective row of packaging containers (201 - 264).

8. Apparatus according to Claim 7, wherein
the packaging containers (201 - 264) are adjustable in the longitudinal direction of the transfer rails (T) relative to these, or the transfer rails (T) are adjustable in the direction of their longitudinal extent relative to the packaging containers, respectively.

9. Apparatus according to Claim 6, wherein the transfer rails (T) are each provided with a servomotor for adjustment relative to each other, which is driveable by an electronic control device.

10. Apparatus according to one of Claims 6 to 9, wherein each transfer rail (T) is provided with a device for receiving the injection-moulded parts from the carrier rails (L) and for discharging the injection-moulded parts into the packaging containers (201 - 264).

## Revendications

1. Procédé pour l'emballage de pièces moulées par injection, en particulier de pièces utilisées en médecine telles que des pointes de pipettes, qui sont extraites de cavités d'une machine de moulage par injection et insérées dans un réservoir ou des conteneurs d'emballage,
- où les pièces moulées par injection sont disposées dans un porte-pièce (100), **caractérisé en ce que**
- les pièces moulées par injection sont extraites du porte-pièce (100) sous la forme de premières rangées (L), ces premières rangées étant étendues ,
- sur quoi les pièces moulées par injection sont extraites des premières rangées (L) étendues sous la forme de secondes rangées (T) disposées orthogonalement par rapport aux premières rangées (L), et
- les secondes rangées (T) sont étendues ,
- sur quoi les pièces moulées par injection des secondes rangées (T) sont insérées dans des conteneurs d'emballage (201 - 264) ou dans un réservoir.

2. Procédé selon la revendication 1, dans lequel des conteneurs d'emballage (201 - 264) de rangées disposées côte-à-côte et parallèles aux secondes rangées (T) sont disposées pour un remplissage à partir des secondes rangées (T).

3. Procédé selon la revendication 2, dans lequel, à un croisement respectif entre premières rangées étendues (L) et secondes rangées non étendues (T), une pièce moulée par injection est transférée vers les secondes rangées (T) et dans lequel les pièces de moulage par injection des secondes rangées (T) sont insérées, après leur extension, dans les conteneurs d'emballage (201 - 264).

4. Procédé selon l'une des revendications 1 à 3, dans lequel les pièces moulées par injection d'un porte-pièce (100) rempli après plusieurs cycles d'extraction sont réparties sur les premières rangées (L) de façon à ce que des pièces moulées par injection extraites d'une même cavité de l'outil de moulage par injection sont positionnées les unes sous les autres dans les premières rangées (L), de façon à ce que les secondes rangées (T) reçoivent respectivement des pièces de moulage par injection de la même cavité des premières rangées (L).

5. Procédé selon l'une des revendications 1 à 4, dans lequel, pour le remplissage du conteneur d'emballage ou du réservoir à partir des secondes rangées (T), un décalage relatif selon la direction longitudinale des secondes rangées (T) est effectué entre les secondes rangées et les conteneurs d'emballage, respectivement les réservoirs.

6. Dispositif pour l'emballage de pièces de moulage par injection, en particulier de pièces utilisées en médecine telles que des pointes de pipettes, qui sont extraites de cavités d'une machine de moulage par injection et insérées dans un réservoir ou des conteneurs d'emballage,
- comprenant
- un porte-pièce (100), présentant des barres de support amovibles (L) pour la réception de pièces de moulage par injection,
- **caractérisé par**
- un assemblage pour l'extension, orthogonalement au sens de leur longueur, des barres de support (L) retirées du porte-pièce (100),
- des barres de transfert (T) disposées orthogonalement aux barres de support (L), et
- un assemblage pour l'extension, orthogonalement au sens de leur longueur, des barres de transfert (T).

7. Dispositif selon la revendication 6, dans lequel
des conteneurs d'emballage (201 - 264) sont disposés en rangées adjacentes s'étendant parallèlement aux barres de transfert (T), et dans lequel les barres de transfert (T) peuvent être étendues de façon à ce qu'une barre de transfert (T) respective peut être positionnée au-dessus d'une rangée de conteneurs d'emballage (201 - 264).

8. Dispositif selon la revendication 7, dans lequel
les conteneurs d'emballage (201 - 264) sont ajustables dans le sens de la longueur des barres de transfert (T) et relativement à celles-ci, respectivement les barres de transfert (T) sont ajustables dans le sens de leur longueur relativement aux conteneurs d'emballage.

9. Dispositif selon la revendication 6, dans lequel les barres de transfert (T) sont respectivement munies d'un servomoteur pouvant être commandé à travers un dispositif de commande pour un ajustement relatif des barres de transfert entre elles.

10. Dispositif selon l'une des revendications 6 à 9, dans lequel chaque barre de transfert (T) est équipée d'un assemblage pour la réception de pièces de moulage par injection des barres de support (L) et pour la remise des pièces de moulage à injection dans les conteneurs d'emballage (201 - 264).
